(19) Europäisches Patentamt
European Patent Office
Office européen des brevets

(11) Veröffentlichungsnummer: **0 545 235 A1**

# (12) EUROPÄISCHE PATENTANMELDUNG

(21) Anmeldenummer: **92120024.2**

(22) Anmeldetag: **25.11.92**

(51) Int. Cl.5: **C08F 220/00**, C08J 5/18, C09K 19/38, B32B 27/30

(30) Priorität: **30.11.91 DE 4139563**

(43) Veröffentlichungstag der Anmeldung: **09.06.93 Patentblatt 93/23**

(84) Benannte Vertragsstaaten: **AT BE CH DE DK ES FR GB IT LI NL SE**

(71) Anmelder: **RÖHM GMBH**
**Kirschenallee**
**W-6100 Darmstadt(DE)**

(72) Erfinder: **Omeis, Jürgen, Dr.**
**Ernst-Ludwig-Weg 48A**
**W-6101 Bickenbach(DE)**
Erfinder: **Knebel, Joachim, Dr.**
**Dieselstrasse 20**
**W-6100 Darmstadt(DE)**
Erfinder: **Goll, Karlheinz**
**Lange Hardt 6**
**W-6144 Zwingenberg(DE)**

## (54) Reversibel vernetzte, orientierbare flüssigkristalline Polymere.

(57) Die Erfindung betrifft reversibel vernetzte, orientierbare flüssigkristalline Polymerfilme, bestehend aus einem flüssigkristallinen Poly(meth)acrylat PP und/oder aus einem Gemisch von PP mit niedermolekularen Vernetzungskomponenten.
Die erfindungsgemäßen Filme können in einer Vielzahl von Anwendungen eingesetzt werden, beispielsweise zur optischen Informationsspeicherung bzw. für Oberflächenbeschichtungen, Laminate oder Verbundsysteme mit speziellen anisotropen Eigenschaften.

EP 0 545 235 A1

Gebiet der Erfindung

Die Erfindung betrifft ein Verfahren zur Herstellung von reversibel vernetzten, orientierbaren flüssigkristallinen Polymeren auf der Basis von flüssigkristallinen Poly(meth)acrylaten PP, die sich beispielsweise zur optischen Datenspeicherung oder für Beschichtungen mit speziellen anisotropen optischen Eigenschaften eignen, wobei das Poly(meth)acrylat PP Substrat eines selbsttragenden Films oder einer Folie, die für spezielle optische Anwendungen eingesetzt werden kann, sein kann.

Stand der Technik

Insbesondere für das Gebiet der Informationsspeicherung sind flüssigkristalline Polymere von großem Interesse (vgl. G. Allen and J. Bevington, Comprehensive Polymer Science, Vol. 5, 701 - 732, Pergamon Press 1989). Anisotrope, dünne flüssigkristalline Polymerfilme lassen sich mit verschiedenen Methoden orientieren und damit in flüssigkristalline Monodomänen überführen. Diese Orientierung kann beispielsweise vorgenommen werden durch:

- elektromagnetische Felder (vgl. EP-A 0 231 856 = US 4 886 718, EP-A 0 231 857 = US 4 837 745, EP-A 0 231 858 = US 4 896 292)
- Oberflächeneffekte (Deutsche Patentanmeldung P 38 25 066)
- mechanische Deformation (vgl. H. Finkelmann, K. Hammerschmidt, Makromol. Chem. 190, 1089 - 1101, 1989).

Die makroskopische Orientierung erfolgt allgemein in einem Temperaturbereich, der zwischen der Glastemperatur (Tg) und der Klärtemperatur (Tn,i) des Polymeren liegt, speziell bei flüssigkristallinen Seitenkettenpolymeren nahe der Klärtemperatur.

EP-A 410 205 beschreibt ein Verfahren zur Herstellung von freitragenden anisotropen, flüssigkristallinen Polymerfilmen auf der Basis photovernetzter Poly(meth)acrylate, die sich beispielsweise zur optischen Datenspeicherung eignen. Die dort angeführten vernetzbaren flüssigkristallinen Polymere lassen sich ohne Trägermaterial durch mechanische Deformation in einen makroskopisch orientierten, anisotropen Zustand überführen.

Aufgabe und Lösung

Bei der Orientierung anisotroper, dünner, flüssigkristalliner Polymerfilme durch elektromagnetische Felder bzw. durch Oberflächeneffekte ist man immer an ein strukturiertes Trägermaterial und an bestimmte Schichtdicken gebunden. Gemäß der deutschen Patentanmeldung P 38 25 066 lassen sich Schichten von 1 - 2 µm Dicke problemlos orientieren. Jedoch stößt diese Methode bei Schichtdicken > 10 µm an ihre Grenzen. Solche Schichten werden in der Regel über die Display-Technologie präpariert, was jedoch mit einer starken thermischen Belastung der Polymeren verbunden ist. Die dritte der genannten Methoden, die mechanische Deformation (Scheren, Verstrecken, Druck) wird zur Orientierung von flüssigkristallinen Hauptketten-Polymeren und vernetzten flüssigkristallinen Polymeren angewandt (vgl. R. Zentel, H. Finkelmann et al., Adv. Polym. Sci. 60/61; M. Gordon, Ed., S. 155 - 162, Springer Verlag, Heidelberg, 1984, R. Zentel et al., Makromol. Chem. 188, 665-674, 1987; H. Finkelmann et al., Mol. Cryst. Liq. Cryst. 142, 85 - 100, 1987).

Die Orientierung von flüssigkristallinen Elastomeren erfolgt analog zu den linearen Seitenkettenpolymeren unterhalb der Klärtemperatur Tn,i (Übergang nematische → isotrope Phase) im kautschukelastischen Zustand und wird unterhalb der Glastemperatur Tg eingefroren. Da vernetzte flüssigkristalline Elastomere, wie Polysiloxane (mit Ausnahme der cyclischen Tri- und Tetramonomeren), sehr niedrige Glastemperaturen, die deutlich unter Raumtemperatur liegen, aufweisen, bleibt die Orientierung nur unter Spannung oder bei tiefen Temperaturen unterhalb Tg der Elastomeren erhalten.

EP-A 410 205 beschreibt ein Verfahren zur Herstellung flüssigkristalliner Poly(meth)acrylate mit eingebauten photovernetzenden Gruppen und ihre Verwendung zur Herstellung anisotroper, flüssigkristalliner, freitragender Polymerfilme, sowie deren Anwendung. Hierbei erfolgt die Filmbildung aus einem organischen Lösungsmittel, welches entsorgt werden muß, wobei die Filme nach der Photovernetzung irreversibel vernetzt und damit nicht mehr thermoplastisch sind.

Es bestand daher die Aufgabe, reversibel vernetzbare flüssigkristalline Polymere zur Verfügung zu stellen, die im unvernetzten Zustand thermoplastisch verarbeitet und mit den bekannten Methoden orientiert werden können und die unterhalb bestimmter Temperaturen freitragende, vernetzte, flüssigkristalline Polymerfilme ausbilden können.

Die bestehende Aufgabe kann in besonders geeigneter Weise gelöst werden, indem man flüssigkristalline

Poly(meth)acrylsäureester mit eingebauten Comonomeren, welche thermoreversibel vernetzbare Gruppen aufweisen, verwendet.

Die Erfindung betrifft daher anisotrope flüssigkristalline Polymerfilme, bestehend aus einem reversibel vernetzten, flüssigkristallinen Poly(meth)acrylsäureester (im folgenden Poly(meth)acrylat) PP. Die Erfindung betrifft weiterhin ein Verfahren zur Herstellung anisotroper flüssigkristalliner , insbesondere freitragender, Polymerfilme sowie ihre Anwendung, insbesondere in der optischen Datenverarbeitung der nicht linearen Optik (NLO), für die Holographie sowie für die Herstellung optischer Komponenten, wobei als Polymermaterial reversibel vernetzbare flüssigkristalline Poly(meth)acrylate PP oder reversibel vernetzbare Gemische aus Poly(meth)acrylaten PP und niedermolekularen Vernetzungskomponenten eingesetzt werden.

Die flüssigkristallinen Poly(meth)acrylate PP

Als monomere Bausteine für die flüssigkristallinen Poly(meth)acrylate PP werden vorzugsweise Monomere der Formel III

$$CH_2 = \underset{\displaystyle R_6}{\overset{}{C}} - D - E - M \qquad III$$

verwendet, wobei

- $R_6$ für Wasserstoff oder Methyl,
- D für eine Gruppe -COO- oder

$$- \overset{\displaystyle O}{\overset{\|}{C}} - \overset{\displaystyle R_1''}{\overset{|}{N}} - ,$$

worin $R_1''$ Wasserstoff oder einen Alkylrest mit 1 bis 4 Kohlenstoffatomen bedeutet,

- E eine Spacereinheit, vorzugsweise bestehend aus einer flexiblen Kette mit 1 bis 14, vorzugsweise 2 - 12 Kettengliedern, insbesondere einer Alkylengruppe - $(CH_2)_n$-, worin n für 1 bis 14, vorzugsweise 2 bis 12, steht, wobei ggfs. einzelne Kettenglieder substituiert sein können, beispielsweise mit $C_1$-$C_4$-Alkylresten oder mit Halogenen wie Fluor oder Chlor, oder worin einzelne Kettenglieder durch eine Etherbrücke oder einen Phenylenrest ersetzt sein können, darstellt, und
- M eine mesogene Gruppe darstellt.

Die monomeren Bausteine der Formel III werden bevorzugt in Anteilen von 85 - 99,9 mol-%, besonders bevorzugt in Anteilen von 90 - 99 mol-%, bei der Herstellung der flüssigkristallinen Poly(meth)acrylate PP verwendet. Daneben können weitere bekannte Vertreter von Monomeren mit mesogenen Gruppen in Anteilen von 0 bis 50 mol-% verwendet werden.

Die Herstellung der Monomeren der Formel III ist an sich bekannt oder kann in an sich bekannter Weise oder in Anlehnung an bekannte Verfahrensweisen (vgl. DE-OS 36 23 395) vorgenommen werden.

Eine Aufstellung geeigneter mesogener Gruppen findet sich beispielsweise bei Kelker und Hatz, Handbook of Liquid Crystals, Verlag Chemie 1989, Seiten 67 bis 113.

Die mesogenen Gruppen M können vorzugsweise durch die Formel IV

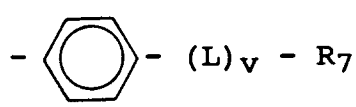

IV

wiedergegeben werden, worin L für eine Brücke, bestehend aus den Resten:

- N = N -;

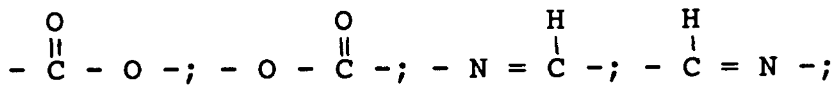

- CH = CH - oder
für einen Rest:

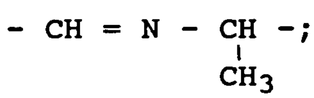

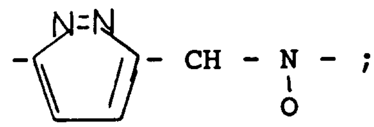

- C ≡ C -
stehen kann, und v für Null oder Eins sowie $R_7$ für einen Rest:

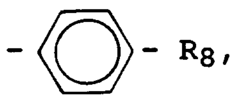

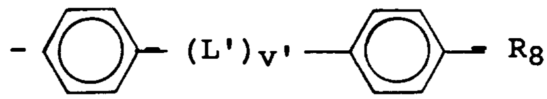

oder, falls v für Null, steht, $R_7$ für einen Rest:

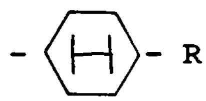

stehen kann,
wobei L' und v' die gleiche Bedeutung wie L und v besitzen und worin $R_8$ für:
Wasserstoff, - $(O)_{s'}$ - $(CH_2)_t$ - H, - CN oder Halogen, insbesondere Fluor, Chlor oder Brom, und s' für Null oder Eins sowie t für eine Zahl von 1 bis 8, insbesondere von 1 bis 6, steht.

Besonders genannt seien Monomere der Formel III, worin M für die folgenden mesogenen Gruppen steht:

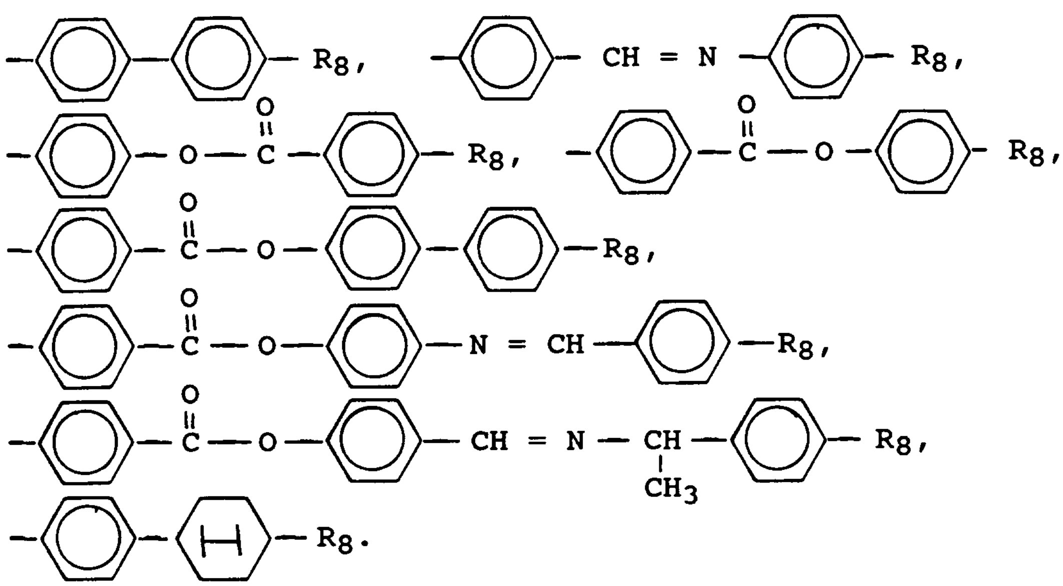

Bei einer weiteren bevorzugten Ausführungsart der vorliegenden Erfindung steht M für ein farbgebendes Strukturelement, einen Farbstoff F (siehe folgenden Abschnitt). Der Anteil der den Farbstoff F enthaltenden

mesogenen monomeren Bausteine im Polymeren kann 0 bis 100 mol-% der gesamten Monomeren ausmachen, vorzugsweise liegt der Anteil bei 10 bis 95 mol. Der Farbstoff F ist vorzugsweise dadurch charakterisiert, daß er unter Einwirkung von eingestrahltem Licht Änderungen seiner Molekülgeometrie erfährt. Damit ist jedoch nicht verbunden, daß die Wellenlänge des eingestrahlten Lichts, in der Regel die eines Schreiblasers, mit dem Absorptionsmaximum des bzw.
der Farbstoffe übereinstimmen muß, da eine Photoisomerisierung auch bei Bestrahlung außerhalb des Absorptionsmaximums stattfindet. Im übrigen gelten gewisse, für Farbstoffe, die in Flüssigkristall-Systemen zur Anwendung kommen sollen, entwickelte Kriterien (vgl. J. Constant et al., J. Phys. D, Appl. Phys. Vol. II, S. 479 ff (1978); F. Jones and T.J. Reeve, Mol. Cryst. Liq., Cryst. Vol. 60, S. 99 ff (1980), EP 43 904 (= US 4 395 350), EP 55 838 (= US 4 426 312), EP 65 869). So sollen diese Farbstoffe im elektrischen Feld nicht ionisieren und sie sollen einen möglichst hohen molekularen Extinktionskoeffizienten besitzen.
Im allgemeinen liegen die Absorptionsmaxima der erfindungsgemäß anwendbaren Farbstoffe F im Wellenlängengereich 300 - 1 000 $\mu$m. Zweckmäßigerweise enthält der Farbstoff F mindestens ein Strukturelement, das unter definierter Lichteinwirkung seine Geometrie ändert.
Solche Strukturelemente können z.B. Mehrfachbindungen enthalten, sie weisen insbesondere die Möglichkeit der cis-trans-Isomerie auf. Weiter kann es sich um andere isomeriefähige Systeme handeln, beispielsweise solche, die aus einer Ringöffnung und/oder einem Protonenübergang beruhen. In der Regel besitzt der Farbstoff F in seiner Vorzugsrichtung eine Länge von mindestens 10 Å. Als Beispiele für Brückengruppen -A'-, die die geometrische Isomerie erlauben, seien die folgenden genannt:
>C = C< ; - N = N - ; >C = N - ;

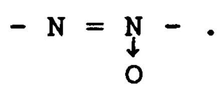

Insbesondere enthalten die Farbstoffe F solche Gruppen, bei denen zwei aromatische Ringe bzw. Ringsysteme durch eine Brückengruppe -A'- verknüpft sind. Es handelt sich also im naheliegendsten Fall um isomerisierbare Derivate des Azobenzols, des Azoxybenzols, der Azomethine usw. Desweiteren enthalten die Farbstoffe F vorteilhaft an sich bekannte Substituenten, welche bestimmend für die Absorptionscharakteristika individueller Farbstoffe sind (vgl. hierzu DE-OS 39 24 554, Seiten 5 bis 7).
Hervorzuheben sind Azofarbstoffe, die den vorstehend genannten Kriterien genügen. Ihre Strukturen werden in DE-OS 39 24 554 ausführlich beschrieben, wobei folgende Prototypen für die Farbstoffe F erwähnt seien, wobei die Farbstoffe in der/den 2,3,5,6 und 2',3',5',6'-Positionen beliebig substituiert sein können.

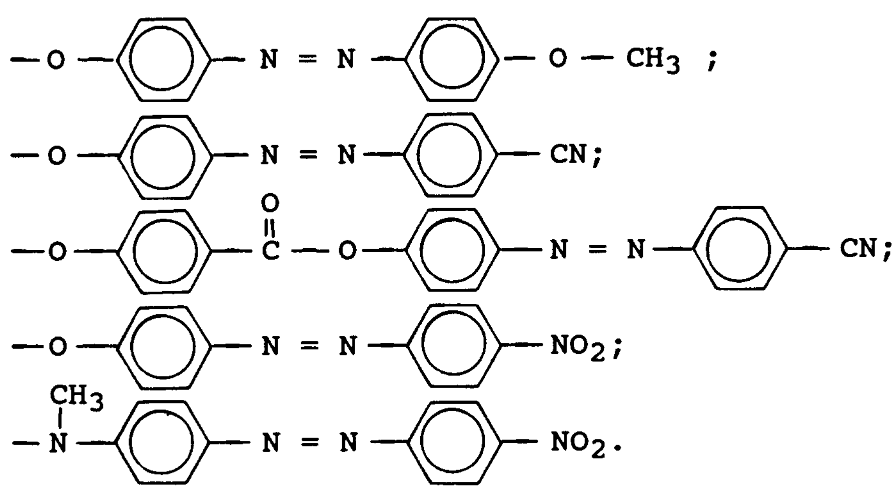

Die obigen Strukturelemente (z.B. an der für eine Substitution vorgesehenen Stellung verknüpft) können als farbgebendes Strukturelement Z" fungieren.

Als weitere monomere Bausteine für die flüssigkristallinen Poly(meth)acrylate PP werden Comonomere mit Substituenten, die mit sich selbst oder mit weiteren Substituenten und/oder niedermolekularen Zuschlägen kovalente Bindungen ausbilden können, die thermisch reversibel spaltbar sind, eingesetzt. Vorzugsweise sind diese Comonomere im flüssigkristallinen Poly(meth)acrylat PP in Mengen von 0,1 bis 15 mol-%, besonders bevorzugt in Mengen von 1 bis 10 mol-% anwesend. Die Comonomeren können vorzugsweise durch die Formel I:

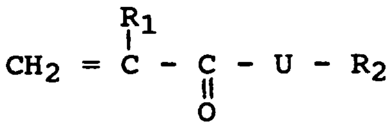

I

wobei:

U für 0, S, NH;

$R_1$ für Wasserstoff, Methyl

$R_2$ für $- X - R_3$

mit X für $-(CH_2)_n-$, $-(O-CH_2)_n-$, wobei

n = 1 bis 6

und $R_3$ für (Formel Ia):

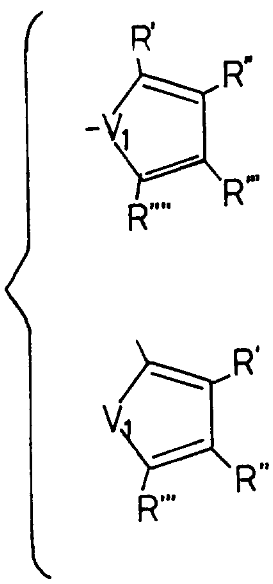

mit $V_1$ für CH,

R', R", R"', R"" unabhängig voneinander für Wasserstoff, n-Alkyl mit 1 bis 6 Kohlenstoffatomen

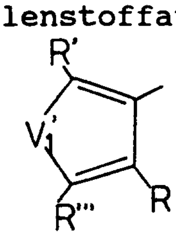

mit $V_1$' für O, S, $CH_2$

und/oder $R_3$ für (Formel Ib):

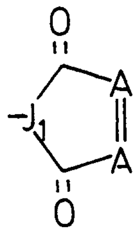

mit A für N, CH
$J_1$ für N, CH

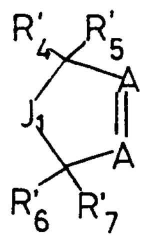

mit $R'_4$ , $R'_5$ , $R'_6$ , $R'_7$ unabhängig voneinander für Wasserstoff, CN, Halogen

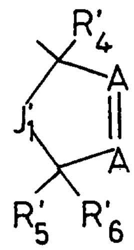

mit $J'_1$ für O, S, NH, $CH_2$

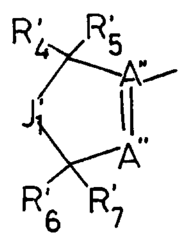

mit A" für C

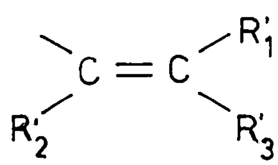

mit $R'_1$ , $R'_2$ , $R'_3$ unabhängig voneinander für Wasserstoff, CN, Halogen, Carboxyl Carboxiester

steht,
beschrieben werden.

Als typische Vertreter für die dienhaltigen Comonomeren der Formel Ia seien genannt:

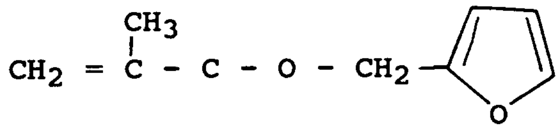 ;

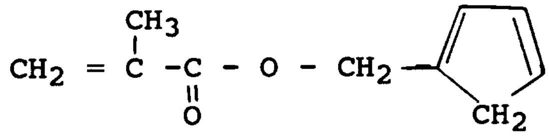 ;

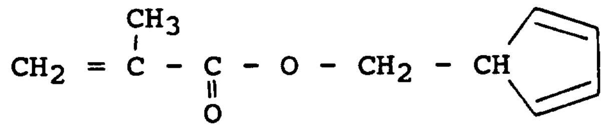 ;

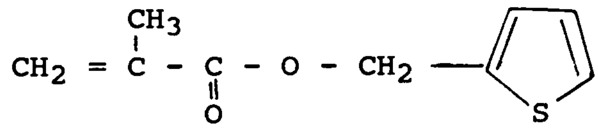 ;

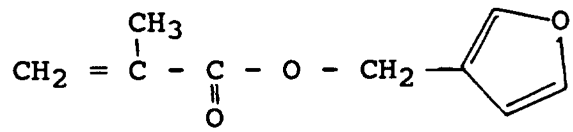 ;

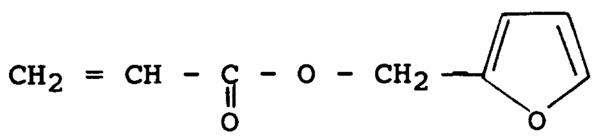 ;

Typische Vertreter für die dienophilen Comonomeren der Formel Ib sind:

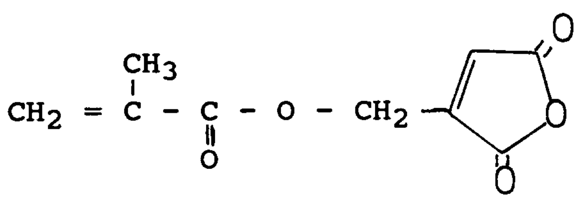 ;

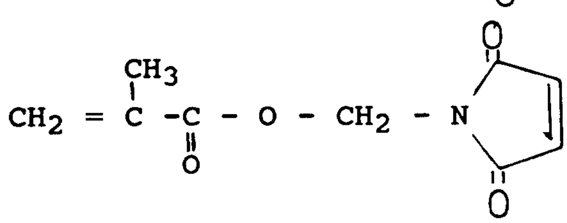 ;

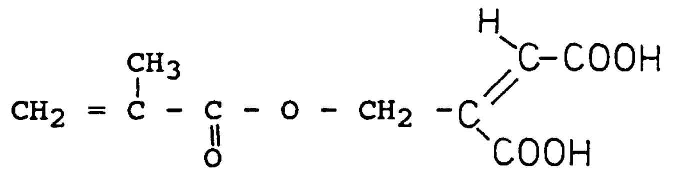

;

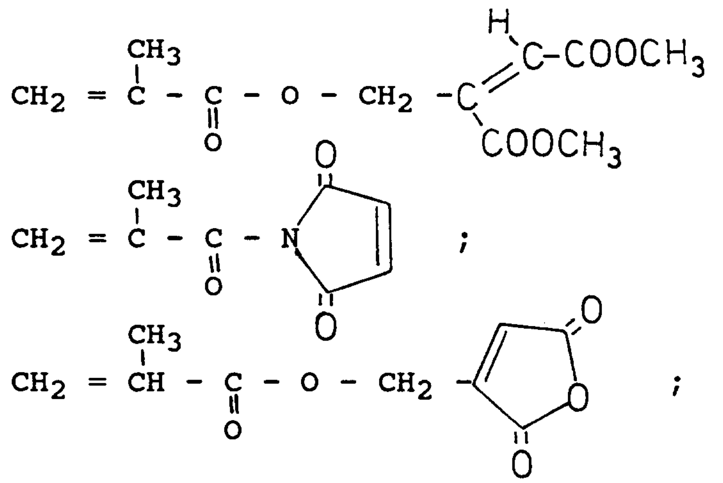

;

;

;

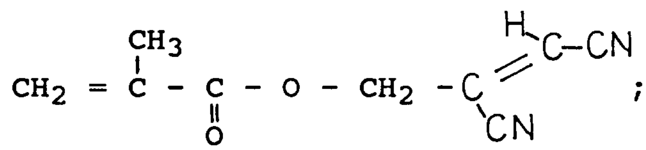

;

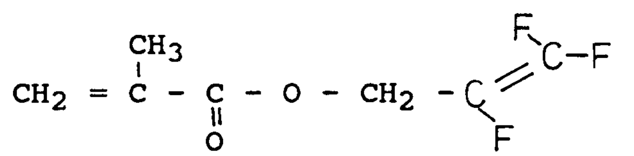

;

Die Comonomeren der Formel Ia können mit denjenigen der Formel Ib in einer Diels-Alder-Reaktion thermisch instabile und damit thermisch reversibel spaltbare Bindungen ausbilden. Damit werden auch thermisch reversibel spaltbare Vernetzungspunkte zwischen den flüssigkristallinen Poly(meth)acrylat-Molekülen ausgebildet.

Diese Vernetzungspunkte werden auch dann ausgebildet, wenn niedermolekulare Verbindungen der Formeln IIa - IIc mit mindestens zwei dien-haltigen Substituenten mit Poly(meth)acrylaten PP, die dienophile Comonomere der Formel Ib in Diels-Alder-Reaktionen thermisch reversibel spaltbare Bedingungen nach folgendem Schema ausbilden:

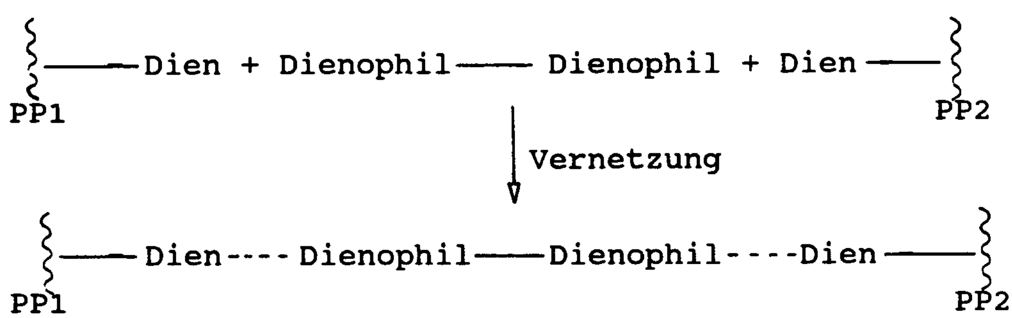

Dies gilt ebenso für die Ausbildung von Vernetzungspunkten zwischen (Poly)meth)acrylaten PP, die dienhaltige Comonomere der Formel Ia aufweisen, mit Hilfe von niedermolekularen Verbindungen der Formeln IId - IIf mit mindestens zwei dienophilen Substituenten. Der Mechanismus der Vernetzung und deren Thermoreversibilität werden in der bisher noch nicht veröffentlichten deutschen Patentanmeldung P 41 04 319.7 beschrieben. Desweiteren beschreiben M.P. Stevens und A.D. Jenkins (J. Polym. Sci., Polym. Chem. Ed. 17, 3675 (1979)) die Vernetzung von Polystyrol über daran anhängende Maleinimid-Gruppen (Dienophile) mit bifunktionellen Dien Difurfuryladipat. Die oben genannten niedermolekularen Verbindungen der Formeln IIa bis IIf besitzen Molekulargewichte Mw ≦ 2 000 Dalton und besitzen mindestens zwei dienhaltige bzw. dienophile Subsitituenten:

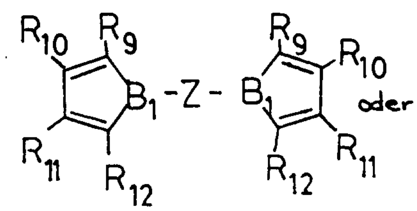 oder 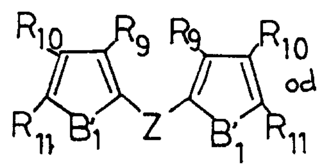 oder 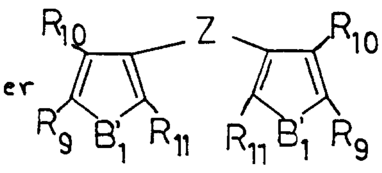

IIa IIb IIc

mit

| | |
|---|---|
| $B_1$ | für CH |
| $B_1'$ | für $CH_2$, O, S, |
| $R_9$, $R_{10}$, $R_{11}$, $R_{12}$ | unabhängig voneinander für Wasserstoff, n-Alkyl mit 1 bis 16 Kohlenstoffatomen, |
| Z | für aliphatischen und/oder aromatischen Rest mit 4 bis 30 Kohlenstoffatomen der noch weitere Heteroatome bzw. Atomgruppen enthalten kann, |

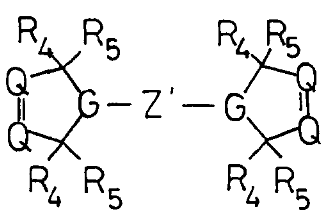 oder 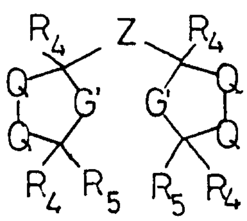 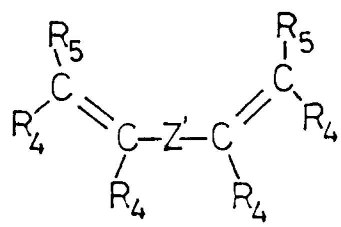

IId IIe IIf

mit

| | |
|---|---|
| G | für N, CH |
| G' | für NH, O, S, $CH_2$ |
| Q | für N, CH |
| $R_4$, $R_5$ | unabhängig voneinander für Wasserstoff, CN, Halogen |
| Z' | für aliphatischen und/oder aromatischen Rest mit 4 bis 30 Kohlenstoffatomen, der noch weitere Heteroatome bzw. Atomgruppen enthalten kann. |

Als Vertreter für die dien-haltigen Verbindungen der Formeln IIa bis IIc genannt:

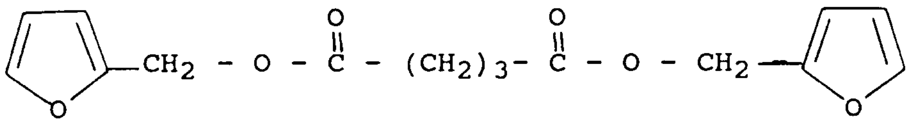 ;

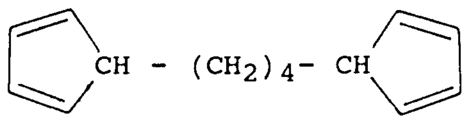 ;

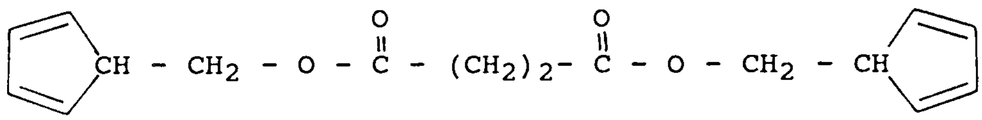

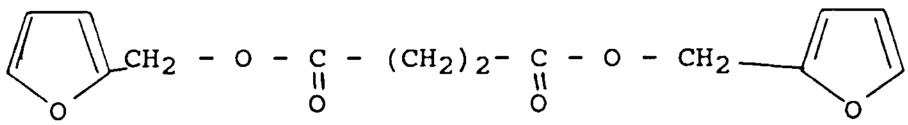

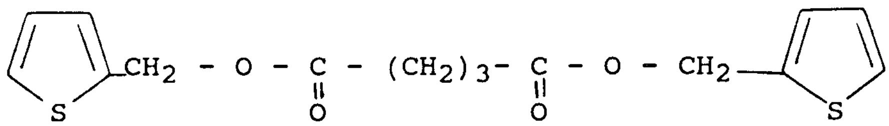

Vertreter für die dienophil-haltigen Verbindungen der Formeln IId bis IIf sind:

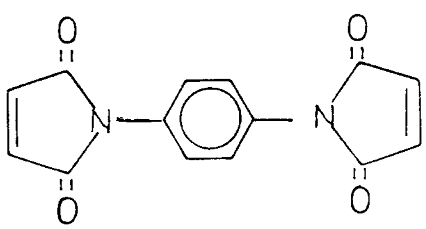 ; 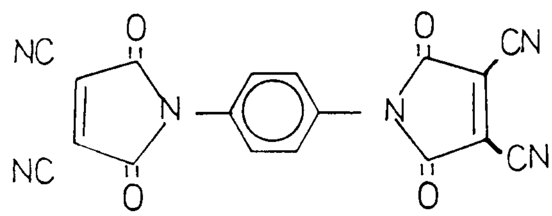

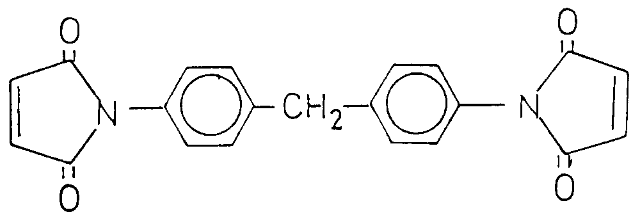 ; 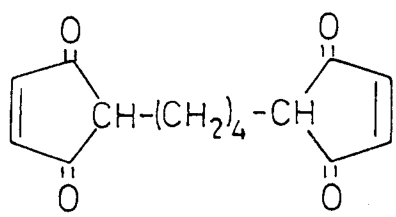 ;

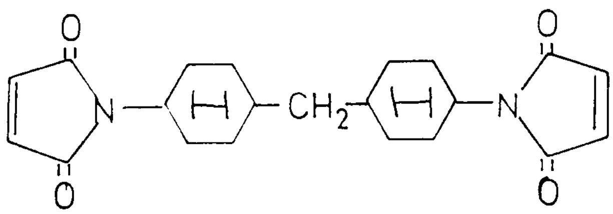

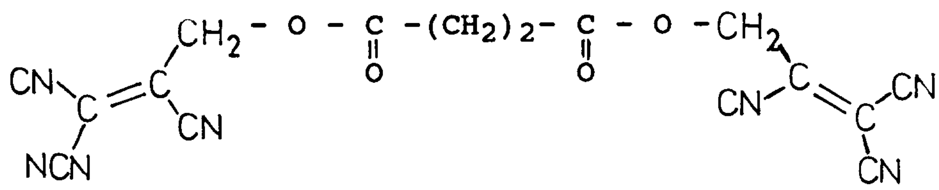

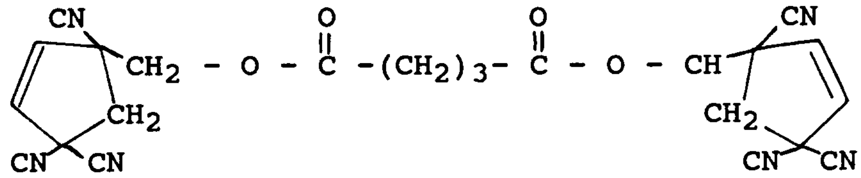 ;

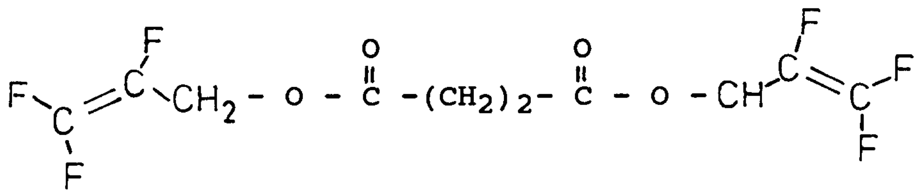 ;

wobei die Aufzählungen nicht vollständig sind.

J.P. Kennedy et al. beschreiben Cyclopentadiengruppenhaltige Polyolefine, die über intermolekulare Diels-Alder-Kondensationen der Cyclopentadienylgruppen vernetzen (J. Polym. Sci., Polym. Chem. Ed. 17, 2055 (1979)). Auch für flüssigkristalline Poly(meth)acrylate, die ausschließlich Comonomere mit Cyclopentadien-Substituenten besitzen, ist somit die Möglichkeit einer Vernetzung gegeben. Infolge eines sich auch bei höheren Temperaturen einstellenden Gleichgewichts zwischen Dien- und Retrodiensynthese ist die Vernetzung jedoch nicht vollkommen thermisch reversibel.

Die aus den Monomeren der Gruppen I und II aufgebauten flüssigkristallinen Poly(meth)acrylate PP besitzen eine Glastemperatur im vernetzten Zustand von ≧ 40 Grad C, bevorzugt zwischen 50 und 80 Grad C (zur Bestimmung der Glastemperatur vgl. H.F. Mark et al., Encyclopedia of Polymer Science and Engineering, 2nd Ed., Vol. 7, pp. 531 - 544 J. Wiley & Sons, 1989). Die erfindungsgemäßen unvernetzten Polymerisate PP weisen mittlere Molekulargewichte Mw, in g pro Mol, wie sie beispielsweise mit Hilfe der Gelpermeations-Chromatographie oder mit der Streulichtmethode bestimmt sind, zwischen 5 000 und 500 000, bevorzugt zwischen 20 000 und 250 000, besonders bevorzugt zwischen 40 000 und 150 000 Dalton auf.

Die erfindungsgemäßen Polymeren PP, aufgebaut aus den Monomeren der Formeln I und III, und die Gemische aus den Polymeren PP und den niedermolekularen Verbindungen gemäß Formel II sollen sich aus der Schmelze bzw. aus konzentrierter Lösung zu homogenen Filmen verarbeiten lassen. Der Gehalt an den Polymeren PP bzw. deren Gemischen mit Verbindungen der Formel II liegt in geeigneten Lösungsmitteln LM im Bereich von 10 bis 90 Gew.-%, bevorzugt zwischen 30 und 60 Gew.-%. Als Lösungsmittel LM eignen sich insbesondere relativ polare Lösungsmittel bzw. Lösungsmittelgemische mit zweckmäßig nicht zu niedrigem Siedepunkt, die sich andererseits aber auch wieder in einfacher Weise, insbesondere durch Verdampfen, entfernen lassen. Besonders geeignet sind Lösungsmittel, die auch als Medium bei der Polymerisation in Lösung dienen können. In erster Linie sind dies sauerstoffhaltige Lösungsmittel wie Dioxan, Tetrahydrofuran, Methylethylketon, Cyclopentanon, Cyclohexanon bzw. halogenierte Kohlenwasserstoffe wie Chloroform, Dichlormethan, Trichlorethan, Ester wie Butylacetat, Ethylenglykolacetat oder cyclische Carbonate oder Lactone wie beispielsweise Ethylencarbonat, so daß eine gewisse Mindestsiedetemperatur von ≧ 40 Grad C bei Normalbedingungen eingehalten wird.

Die Herstellung der flüssigkristallinen Poly(meth)acrylate PP

Die Herstellung der Poly(meth)acrylate PP kann mit Polymerisationsverfahren des Standes der Technik (vgl. hierzu H. Rauch-Puntigam, Th. Völker, Acryl- und Methacrylverbindungen, Springer-Verlag 1967) durchgeführt werden.

Als Polymerisationsinitiatoren kommen die an sich bekannten, insbesondere Azoverbindungen und Peroxiverbindungen, infrage, dabei insbesondere die organolöslichen, die bei der Lösungspolymerisation Verwendung finden, wobei die Temperaturabhängigkeit der Initiatorwirksamkeit mit den Eigenschaften des Lösungsmittels LM, insbesondere dessen Siedepunkt, in Einklang gebracht werden sollen (vgl. F.H. Mark, Encyclopedia of Polymer Science and Technology, 2nd Ed., Vol. 15, 402 - 418, J. Wiley 1989). Genannt seien beispielsweise Azoisobutyronitril, tert.-Butylperoctoat, Benzoylperoxid, tert.-Butylperpivalat u.a. Die Initiatorkonzentrationen bezogen auf die Monomeren liegen ebenfalls in den üblichen Bereichen von 0,01 bis 2 Gew.-%.

Ebenfalls können bei der Polymerisation an sich übliche Molekulargewichts- oder Kettenübertragungsregler in Mengen von 0,1 bis 5 Gew.-% bezogen auf die Monomeren zugegen sein (vgl. H. Rauch-Puntigam, Th. Völker, Acryl- und Methacrylverbindungen, Springer-Verlag 1967). Als Molekulargewichtsregler werden insbesondere Mercaptane, wie Butylmercaptan, tert.-Dodecylmercaptan oder auch polyfunktionelle Mercaptane mit 2 bis 6 SH-Gruppen eingesetzt. Weiterhin können auch halogenhaltige Verbindungen, wie Tetrachlorkohlenstoff oder Benzylbromid für die Molekulargewichtsregelung benutzt werden. Bevorzugt werden allerdings Regler, die in der Lage sind, die wachsende Polymerkette mit einem Wasserstoffatom zu terminieren. Bei der Lösungspolymerisation erübrigt sich meistens der Zusatz von Molekulargewichtsreglern.

Bei der Lösungspolymerisation richtet sich die Polymerisationstemperatur nach dem Lösungsmittel, beispielsweise wenn unter Rückfluß gearbeitet wird, sie liegt im allgemeinen bei 20 bis 100 Grad C, insbesondere bei 40 bis 80 Grad C. Die Polymerisationsdauer liegt bevorzugt zwischen 12 und 36 Stunden. Bei der Substanzpolymerisation der Poly(meth)acrylate PP werden die Monomeren im Folienbeutel im Wasserbad bei 20 bis 90 Grad C, insbesondere bei 30 bis 70 Grad C, während eines Zeitraums von 6 bis 72 Stunden, bevorzugt von 12 bis 48 Stunden polymerisiert.

Das flüssigkristalline Poly(meth)acrylat PP kann aus der Lösung oder der Schmelze hieraus zu Filmen verarbeitet werden, es kann aber auch aus der Lösung mit einem Nicht-Lösungsmittel gefällt, gegebenenfalls getrocknet und bei Bedarf in Lösung gebracht werden, woraus es verarbeitet werden kann.

Die Herstellung der reversibel vernetzten, anisotrop orientierten Filme aus den Polymeren PP bzw. aus deren Gemischen mit niedermolekularen Vernetzern der Formel II

Die Filme können in bekannter Weise erzeugt werden, beispielsweise durch Aufbringen einer Lösung der Polymeren PP bzw. deren Gemischen mit niedermolekularen Vernetzern der Formel II auf einem Träger. Dies kann beispielsweise durch Rakeln, Tauchen, Spin-Coating u.ä. geschehen. Anschießend wird das Lösungsmittel entfernt, beispielsweise durch Verdunsten und durch anschließendes Trocknen im Trockenschrank. Hierbei bilden sich die thermisch reversiblen Vernetzungspunkte durch die Reaktion von Dien (Comonomere der Formel Ia bzw. niedermolekulare Verbindungen der Formel IIa + IIc) und Dienophil (Comonomere der Formel Ib bzw. niedermolekulare Verbindungen der Formel IId - IIf) und damit kovalente Bindungen zwischen den Polymermolekülen aus.

In einem zweiten Schritt wird der vernetzte Polymerfilm verstreckt, wobei die Verstreckung etwa 5 K unterhalb der Klärtemperatur Tn,i und deutlich unterhalb der Temperatur, bei der sich die Vernetzungsstellen zwischen den flüssigkristallinen Poly(meth)acrylat-Polymeren reversibel öffen, durchgeführt wird. Zusätzlich kann vor der Verstreckung 10 bis 20 K unterhalb Tn,i getempert werden, beispielsweise von 5 min bis 5 Stunden in Abhängigkeit von der Schichtdicke und vom Vernetzungsgrad. Der Verstreckungsgrad $\alpha = l/l_0$ liegt zwischen 50 und 300 %, vorteilhaft über 100 %. Nach der Verstreckung wird die Probe langsam mit 10 K/min auf Raumtemperatur abgekühlt. Der erreichte Orientierungsgrad kann bei Raumtemperatur durch UV-Vis- oder IR-Spektroskopie bestimmt werden.

Eine weitere vorteilhafte Ausführungsform zur Herstellung von reversibel vernetzten, anisotrop orientierten flüssigkristallinen Polymerfilmen ist die Herstellung aus der Schmelze des flüssigkristallinen Poly(meth)-acrylats PP bzw. dessen Gemischs mit niedermolekularen Vernetzern der Formel II. Die Schmelze wird bei 220 bis 280 Grad C, vorzugsweise bei 240 Grad C durch eine Schlitzdüse mit einem Austrittsschlitz von 0,1 bis 2 mm extrudiert und wird durch Glätten auf einem Walzenglättwerk mit Walzentemperaturen von 50 bis 100 Grad C zu einer Folie mit einer Dicke von 0,1 bis 1 mm verarbeitet. Beim Abkühlen auf dem Walzenglättwerk bilden sich die thermisch reversiblen Vernetzungspunkte, so daß die Polymermoleküle in der resultierenden Folie kovalent vernetzt sind. Die Orientierung der Folie (bzw. des Films) erfolgt wie oben beschrieben durch Verstrecken bei einer Temperatur von 5K unterhalb Tn,i und deutlich unterhalb der Temperatur, bei der sich die Vernetzungsstellen zwischen den Polymeren PP reversibel öffnen.

Desweiteren ist eine Orientierung der Polymeren PP vor und/oder während der Vernetzung möglich, wenn die Walzenoberflächen des Walzenglättwerks so strukturiert sind, daß sich die Polymeren PP direkt beim Auftrag auf die Walzenoberfläche orientieren, wobei sich gleichzeitig und/oder danach, bedingt durch das Abkühlen der Polymermasse auf der Walzenoberfläche, die thermisch reversiblen Vernetzungspunkte zwischen den Polymermolekülen ausbilden. Weiterhin können die Polymeren PP in der Schmelze vor und/oder während der Vernetzung auf beliebigen strukturierten Trägermaterialien orientiert werden, wobei die Abkühltemperaturen so gewählt werden müssen, daß die Orientierung vor der Vernetzung stattfindet.

Vorteilhafte Wirkungen der Erfindung

Der unmittelbare Vorteil der erfindungsgemäßen Verfahrens liegt in der Bereitstellung von Filmen oder Folien aus reversibel vernetzten, orientierten flüssigkristallinen Poly(meth)acrylaten PP, die mit einem strukturierten Trägermaterial und/oder durch Verstrecken ab Verstreckungsgraden über 100 % orientiert werden können, wobei die Vernetzung thermisch reversibel ist. Die thermisch reversible Vernetzung des Films ermöglicht eine mehrmalige thermoplastische Verarbeitung desselben, bei der die Orientierung der flüssigkristallinen Einheiten jeweils neu vorgegeben werden kann. Die Orientierung der flüssigkristallinen Polymeren ist über einen weiten Schichtdickenbereich auch ohne die Anwendung eines strukturierten Trägermaterials möglich.
Die erfindungsgemäßen Filme eignen sich hervorragend für eine Vielzahl von Anwendungen, beispielsweise zur optischen Informationsspeicherung, insbesondere zur reversiblen digitalen und holographischen Datenspeicherung, als optische Komponenten sowie für die nicht lineare Optik. Die erfindungsgemäß hergestellten Materialien eignen sich desweiteren für Oberflächenbeschichtung, Laminate oder Verbundsysteme mit speziellen anisotropen Eigenschaften. So lassen sich über die Schicktdicke, die Orientierung und der daraus resultierenden Doppelbrechung definierte optische Wegunterschiede einstellen, die für Anwendungen wie beispielsweise Polarisationssteller, Antireflexschichten für großflächige Display u.ä. geeignet sind. In der nichtlinearen Optik können die reversibel vernetzten, orientierten Poly(meth)acrylate PP für die Polung von Chromophoren mit nichtlinearen optischen Eigenschaften eingesetzt werden.

BEISPIELE

Die folgenden Beispiele dienen zur Erläuterung der Erfindung. Folgende Monomeren als Prototypen ihrer jeweiligen Monomer-Klasse wurden zur Herstellung der Polymeren PP verwendet:

Monomere der Formel III:

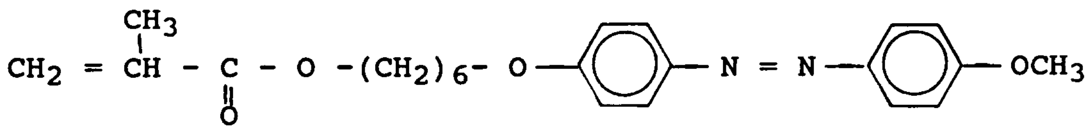

(Monomer III-A)

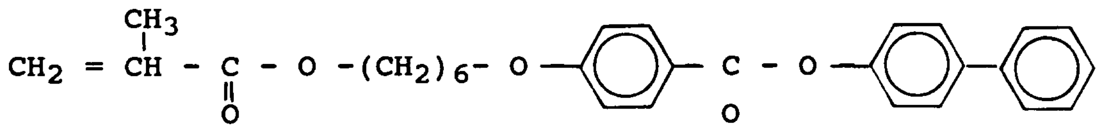

(Monomer III-B)

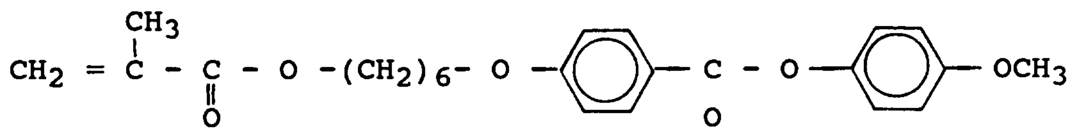

(Monomer III-C)

Monomer der Formel I:

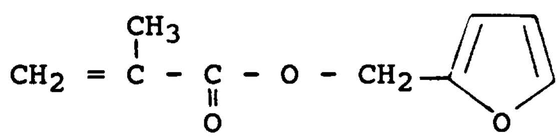

(Monomer der Formel I-A)

Verbindung der Formel II:

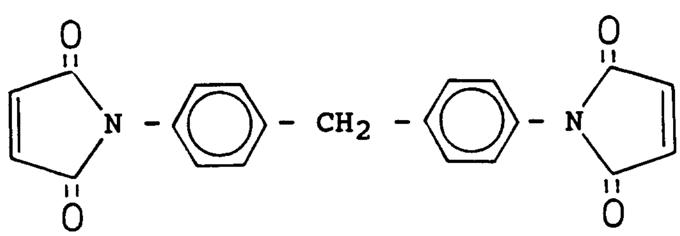

(Verbindung II-A)

Beispiel 1

A. Polymerisation der flüssigkristallinen Polymeren PP1

In einem 250 ml Dreihalskolben mit Gaseinleitung, Rückflußkühler und mechan. Rührer werden 58,7 g Monomer III-C (142 mmol) und 1,25 g (7,5 mmol) Monomer I-A in 180 ml Toluol bei Raumtemperatur gelöst. Nach Zugabe von 24,5 mg (= 0,1 mol-% b.a. die Monomeren) 2,2'-Azobis-(isobutyronitril) wird der

Ansatz durch dreimaliges kurzzeitiges Anlegen von Wasserstrahlvakuum von Sauerstoff befreit und unter einem Argonpolster 22 Stunden bei 70 Grad C polymerisiert. Nach Beendigung der Polymerisation wird die Lösung in 1 l Methanol unter Rühren ausgefällt, wobei dieser Vorgang sooft wiederholt wird, bis durch DC-Kontrolle kein Restmonomeres nachgewiesen werden kann. Anschließend wird 3 Tage bei 60 Grad C im Vakuumtrockenschrank getrocknet. Man erhält das flüssigkristalline Präpolymere der Formel PP1:

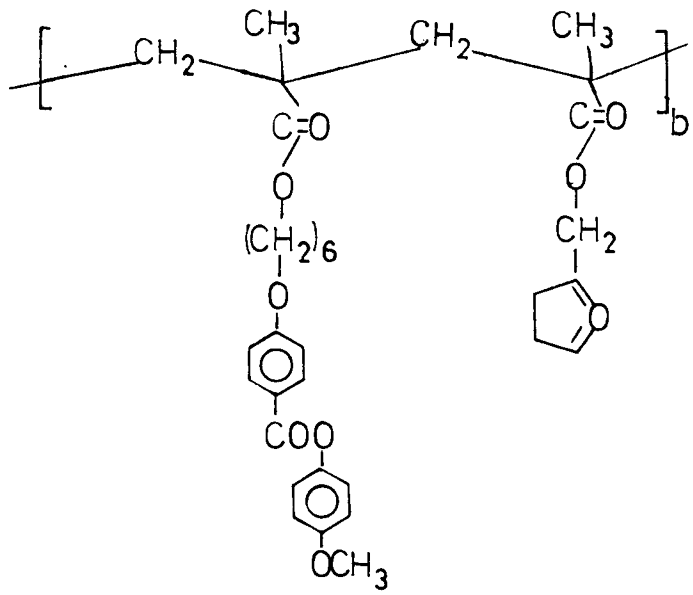

a + b = 100 mol-%
a = 95 mol-%
b = 5 mol-%
Ausbeute: 8,5 g (14,1 % d.Th.)

Charakterisierung:

Mn = 82,900 g/mol     Tg = 33 Grad C
U = 1,34     Tn,i = 97 Grad C
Die Molgewichte wurden mittels SEC unter Verwendung einer PMMA-Eichkurve in THF bei 25 Grad C bestimmt. Die Angaben von Tg und Tn,i (= Klärtemperatur) beziehen sich auf DSC-Daten, die aus dem "Onset" der 2. Heizkurve (20 k/min) ermittelt wurden.

B. Filmpräparation und Vernetzung des flüssigkristallinen Polymeren PP1:

Eine Lösung von 8,1 g des Polymeren PP1 und 180 mg der Verbindung der Formel II-A (im folgenden Bismaleinimid abgekürzt) in 20 ml Methylenchlorid werden über ein 0,25 µm Teflon-Filter (Fa. Milipore) staubfrei filtriert. Mit einer 200 µm-Rakel werden mit dieser Lösung auf silanisierten Glasplatten (25 x 25 cm) Filme mit einer definierten Schichtdicke ausgestrichen und 6 Stunden bei Raumtemperatur, anschließend 12 Stunden bei 50 Grad C getrocknet. Der durch Toluol extrahierte lösliche Anteil beträgt 5,8 %, der Quellungsgrad (Toluol, Raumtemperatur) liegt bei 37.

C. Verstreckung und optische Charakterisierung der vernetzten LC-Polymeren PP1

Aus den unter B. beschriebenen vernetzten flüssigkristallinen Filmen werden Probenkörper (40 x 10 mm) geschnitten und unter definierten Bedingungen mechanisch verstreckt.

a. Der Probenkörper wird auf eine Temperatur von 95 Grad C erwärmt und bei dieser Temperatur um 95 % gedehnt

$$(\alpha = 95\ \%;\ \alpha = \frac{l - l_0}{l_0}).$$

Anschließend wird die klare, transparente Probe unter einem Polarisationsmikroskop unter gekreuzten Polfiltern im Durchlicht charakterisiert. Die Intensitäten I (parallel zum Polarisator) und $I_{45}$ Grad (45 Grad-Winkel zum Polarisator) werden mit Hilfe einer Photozelle registriert und zur Bestimmung der makroskopischen Orientierung der flüssigkristallinen verstreckten Polymeren verwendet. (OWG = Orientierungswirkungs-grad, makroskopisch)

$$OWG\ (\%) = \frac{I_{\parallel} - I_{45}}{I_{\parallel}} \cdot 100$$

Anschließend wird auf einem zusätzlich angebrachten Mikroskopheiztisch die Klärtemperatur (Tn,i) bei einer Heizrate von 10 k/min bestimmt
OWG = 95 %
Tn,i = 91 Grad C.
b) Wie bei Methode a wird der Probenkörper auf 95 Grad C erwärmt, anschließend aber bei 90 Grad C auf $\alpha$ = 107 % verstreckt. Die Charakterisierung erfolgt analog a:
OWG = 66 %
Tn,i = 91 Grad C.

Beispiel 2

A. Polymerisation des flüssigkristallinen Polymeren PP2

In der in Beispiel 1 beschriebenen Apparatur werden unter gleichen Bedingungen 48,9 g Monomeren III-A (123,4 mmol) und 1,08 g Monomer I-A (6,5 mmol) eingewogen und in 100 mol absolutiertem Dioxan gelöst. Die Lösung wird von Sauerstoff befreit und nach Zugabe von 213 mg 2,2'-Azobis-(isobutyronitril) unter einem Argonpolster 22 Stunden bei 70 Grad C polymerisiert. Anschließend wird wie bei Beispiel 1 beschrieben aufgearbeitet. Man erhält das flüssigkristalline Praepolymere der Formel

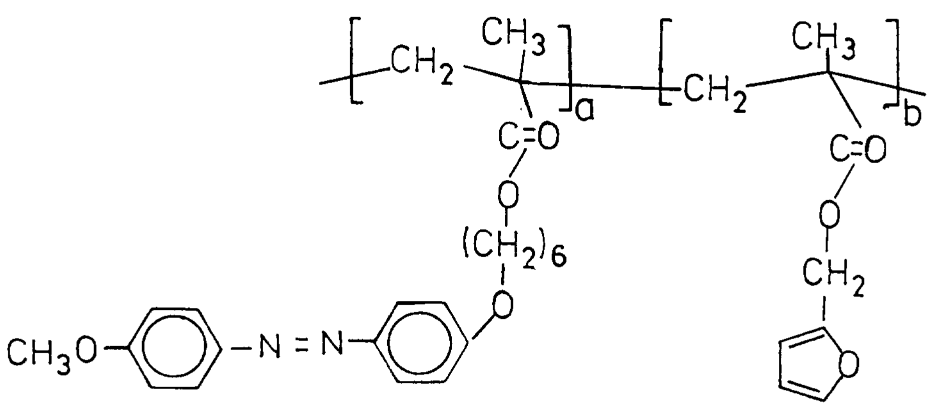

a + b = 100 mol.-%
a = 95 mol.-%
b = 5 mol.-%
Ausbeute:40,2g = 80,4 % d.Th.

Charakterisierung:

Mn = 46.400 g/mol Tg = 61 Grad C
U = 2,42 Tn,i = 127 Grad C

B. Filmpräparation und Vernetzung des Praepolymeren PP2

10 g des Polymeren PP2 und 0,23 g Bismaleinimid werden wie bei Beispiel 1 beschrieben gelöst und staubfrei filtriert. Die Filmpraeparation erfolgt ebenfalls analog zu Beispiel 1. Der rechteckige Probenkörper mit einer Schichtdicke von 45 ± 6 um und 400 mm Länge und 100 mm Breite wird 12 Stunden bei 70 Grad C getempert und anschließend bei 120 Grad C um 68 % verstreckt ( = 68 %).
Tg = 61 Grad C
Tn,i = 118 Grad C

C. Verstreckung und optische Charakterisierung

Die Verstreckung wurde bereits unter B. beschrieben und die Charakterisierung erfolgt wie bei Beispiel 1.
OWG = 77 %
Tn,i = 117 Grad C (polarisationsmikroskopisch)

Beispiel 3

A. Polymerisation des flüssigkristallinen Polymeren PP3

58,8 g Monomer III-B (129,5 mmol) und 1,13 g Monomer I-A (6,8 mmol) werden in 180 mol absolutiertem Dioxan gelöst und mit 0,448 g 2,2'-Azobis-(isobutyronitril) wie in Beispiel 2 beschrieben polymerisiert und aufgearbeitet. Man erhält das flüssigkristalline Praepolymere PP3 der Formel

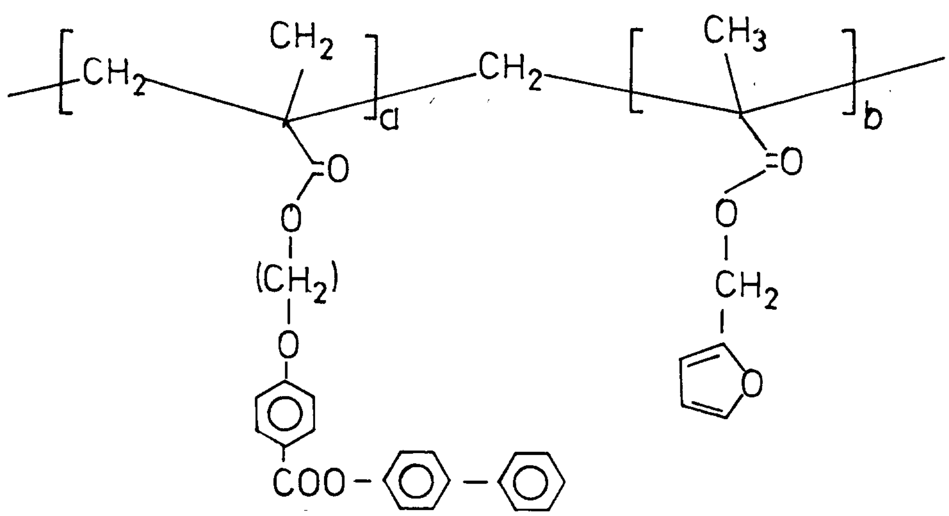

a + b = 100 mol.-%
a = 95 mol.-%
b = 5 mol.-%
Ausbeute: 57,3 g (95,5 % d.Th.)

Charakterisierung:

Mn = 45 000 g/mol Tg = 40 Grad C
U = 5,9 Tn,i = 110 Grad C

B. Filmpräparation und Vernetzung

10 g Polymer PP3 und 0,21 g Bismaleinimid werden in 10 ml Methylenchlorid gelöst und im Anschluß wie unter Beispiel 1 beschrieben behandelt. Man erhält Filme mit einer Schichtdicke von 43 ± 6 um, nachdem die Schichten 12 Stunden bei 50 Grad C getempert wurden.

C. Verstreckung und Charakterisierung der vernetzten Polymeren PP3

Die wie in Beispiel 1 beschriebenen Probenkörper werden auf 110 Grad erwärmt und nach ca. 5 min bei 105 Grad C verstreckt und polarisationsmikroskopisch charakterisiert (Beispiel 1). Die transparenten, klaren Filme zeigen folgende Werte:

| Versuch | Dehnung | OWG | Tn,i |
|---|---|---|---|
| a | 100 % | 94 % | 103 Grad C |
| b | 71 % | 96 % | 103 Grad C |

Beispiel 4

A. Polymerisation des flüssigkristallinen Polymeren PP4

0,9 g des Monomeren III-A (2,3 mmol), 97,2 g (214 mmol) des Monomeren III-B und 1,89 g Monomer I-A (11,3 mmol) wurden wie in Beispiel 2 beschrieben polymerisiert und aufgearbeitet. In Abweichung davon wurde der Ansatz in einem 500 ml-Kolben durchgeführt, wobei 300 ml Dioxan als Lösungsmittel verwendet wurden. Die Ausfällung erfolgte mehrmals in 2 l Methanol. Man erhält das flüssigkristalline Polymere PP4:

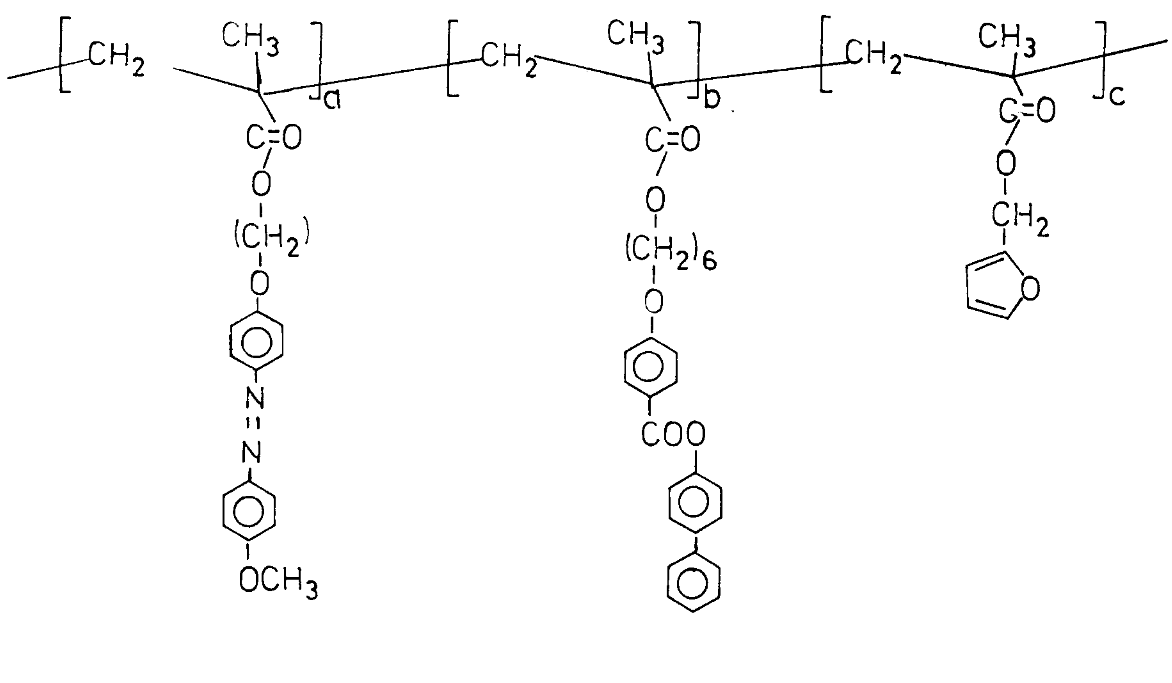

a + b + c = 100 mol-%
a = 1 mol-%
b = 94 mol-%
c = 5 mol-%
Ausbeute : 96,3 g = 96,3 % d.Th.

Charakterisierung:

Mn = 99.300 g/mol   Tg = 59 Grad C
U = 6,5   Tn,i = 109 Grad C

B. Filmpräparation und Vernetzung des flüssigkristallinen Präpolymeren PP4

90 g des Polymeren PP4 wurden mit 1,85 g Bismaleinimid in 300 ml Methylenchlorid gelöst, filtriert und wie unter Beispiel 1 beschrieben, verfilmt. Der extrahierbare Rückstand betrug ca. 5 - 7 % der Einwaage. Die Filmdicke betrug 110 ± 10 µm. Die Probenkörper waren auf 100 mm Länge und 10 mm Breite dimensioniert.

C. Verstreckung und optische Charakterisierung des vernetzten Polymeren PP4

In Abweichung zu den vorhergehenden Beispielen wurden die Proben in einer Thermostatkammer einer Zug-Dehnungs-Apparatur (Zwick 1474) durchgeführt. Die Probe wird kurzzeitig auf 110 Grad C erwärmt und bei T = 105 Grad C verstreckt; $\alpha$ = 350 %.

| Temp. | OWG | Tn,i |
|---|---|---|
| 105 Grad C | 70 % | 100 Grad C |

Zusätzlich wurde per UV-VIS-Spektroskopie das dichroitische Verhältnis zu S = -0,38*) bestimmt.

*) $$S = \frac{E_{\parallel} - E_{\perp}}{E_{\parallel} + 2E_{\perp}}$$

$E_{\parallel}$ = Extinktion bei 400 nm parallel zur Zugrichtung gemessen

$E_{\perp}$ = Extinktion bei 400 nm senkrecht zur Zugrichtung gemessen.

## Patentansprüche

1. Anisotrope flüssigkristalline Polymerfilme, bestehend aus einem reversibel vernetzten flüssigkristallinen Poly(meth)acrylsäureester PP.

2. Verfahren zur Herstellung von anisotropen, flüssigkristallinen Polymerfilmen gemäß Anspruch 1, dadurch gekennzeichnet, daß die flüssigkristallinen Poly(meth)acrylsäureester PP Anteile von 0,1 - 15 mol-%, vorzugsweise 1 - 10 mol-%, bezogen auf die Gesamtheit der Monomere, Comonomere enthalten, die thermoreversibel vernetzbare Gruppen aufweisen.

3. Verfahren zur Herstellung von anisotropen, flüssigkristallinen Polymerfilmen gemäß Anspruch 2, dadurch gekennzeichnet, daß die flüssigkristallinen Poly(meth)acrylsäureester PP Anteile von 0,1 - 15 mol-%, vorzugsweise 1 - 10 mol-%, bezogen auf die Gesamtheit der Monomere, Comonomere der Formel I:

$$CH_2 = \overset{\overset{\displaystyle R_1}{|}}{C} - \overset{\overset{\displaystyle O}{\parallel}}{C} - U - R_2 \qquad (I)$$

wobei:
U für O, S, NH;

$R_1$ für Wasserstoff, Methyl

$R_2$ für - X - $R_3$

mit x für $-(CH_2)_n-$, $-(O-CH_2)_n-$, wobei

n = 1 bis 6

und $R_3$ für (Formel Ia):

Ia 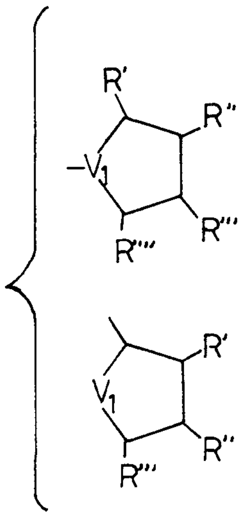

mit $V_1$ fur CH

R', R'', R''', R'''' unabhängig voneinander für Wasserstoff, n-Alkyl mit 1 bis 6 Kohlenstoffatomen

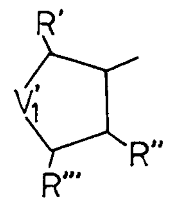

mit $V_1'$ für O, S. $CH_2$

und/oder $R_3$ für (Formel Ib):

IIb 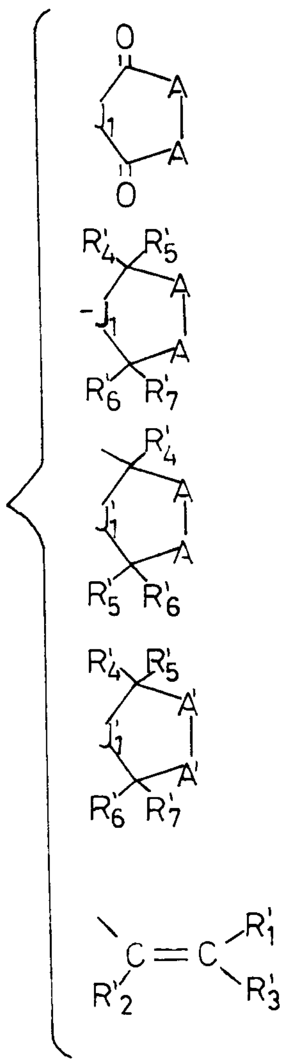

mit A für N, CH
$J_1$ für N, CH

mit $R'_4$, $R'_5$, $R'_6$, $R'_7$ unabhängig voneinander für Wasserstoff, CH, Halogen

mit $J'_1$ für O, S., NH, $CH_2$

mit A'' für C

mit $R'_1$, $R'_2$, $R'_3$ unabhängig voneinander für Wasserstoff, CN, Halogen, Carboxyl, Carboxiester

**4.** Verfahren zur Herstellung von anisotropen, flüssigkristallinen Polymerfilmen gemäß Anspruch 3, dadurch gekennzeichnet, daß die Polymerfilme aus einem thermoreversibel vernetzenden Gemisch bestehen, aufgebaut aus:

A) 70 bis 99,8 Gew.-% flüssigkristallinem Poly(meth)acrylsäureester PP gemäß Anspruch 3 und

B) 0,2 bis 30 Gew.-% einer Verbindung der Formeln IIa - IIf:

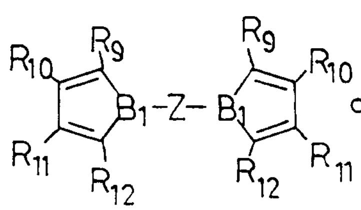

oder

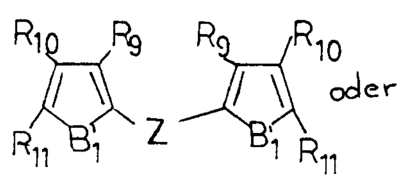

oder

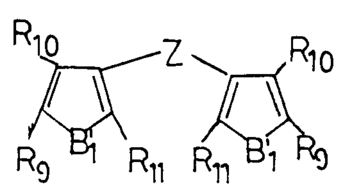

IIa IIb IIc

mit

| | |
|---|---|
| $B_1$ | für CH, |
| $B_2$ | für $CH_2$, O, S, |
| $R_9$, $R_{10}$, $R_{11}$, $R_{12}$ | unabhängig voneinander für Wasserstoff, n-Alkyl mit 1 - 6 Kohlenstoffatomen |

Z für aliphatischen und/oder aromatischen Rest mit 4 bis 30 Kohlenstoffatomen der noch weitere Heteroatome bzw. Atomgruppen enthalten kann,

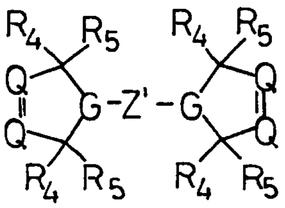 oder 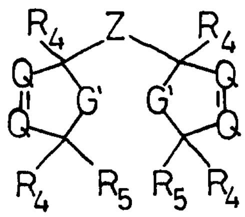 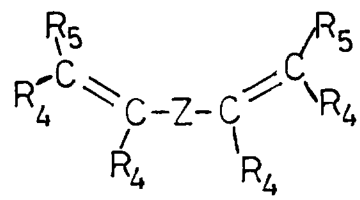

IId IIe IIf

mit

| | |
|---|---|
| G | für N, CH |
| G' | für NH, O, S, $CH_2$ |
| Q | für N, CH |
| $R_4$, $R_5$ | unabhängig voneinander für Wasserstoff, CN, Halogen |
| Z' | für aliphatischen und/oder aromatischen Rest mit 4 bis 30 Kohlenstoffatomen, der noch weitere Heteroatome bzw. Atomgruppen enthalten kann. |

**5.** Verfahren gemäß den Ansprüchen 2 bis 4, dadurch gekennzeichnet, daß die Poly(meth)acrylsäureester PP neben den Monomeren der Formel I noch solche der Formel III:

$$CH_2 = \overset{R_6}{\overset{|}{C}} - D - E - M \qquad III$$

mit

$R_6$ = Wasserstoff, Methyl

D = -COO- oder -CON$R_1$''-, worin $R_1$'' für H oder einen Alkylrest mit 1 bis 4 Kohlenstoffatomen steht,

E = Spacereinheit mit 1 bis 14 Kettengliedern

und

M = mesogene Gruppe,

enthalten, wobei sich die Anteile der Monomeren I und III, ggfs noch mit weiteren 0 - 10 Gew.-% radikalisch copolymerisierbaren Monomereinheiten, zu 100 Gew.-% ergänzen.

**6.** Verfahren gemaß den Ansprüchen 2 bis 5, dadurch gekennzeichnet, daß die Glastemperatur des thermoreversibel vernetzenden Poly(meth)acrylsäureesters PP oder des thermoreversibel vernetzenden Gemischs aus PP und Verbindungen der Formel II bei Tg ≧ 40 Grad C liegt.

**7.** Verfahren gemäß den Ansprüchen 2 bis 6, dadurch gekennzeichnet, daß die Filmbildung aus einer Lösung des thermoreversibel vernetzenden Poly(meth)acrylsäureesters PP oder einer Lösung des thermoreversibel vernetzenden Gemischs aus PP und einer oder mehreren Verbindungen der Formel II in einem organischen Lösungsmittel LM erfolgt.

**8.** Verfahren gemäß Anspruch 7, dadurch gekennzeichnet, daß der Siedepunkt des Lösungsmittels LM unter Normalbedingungen mindestens 40 Grad C beträgt.

**9.** Verfahren gemäß den Ansprüchen 1 bis 8, dadurch gekennzeichnet, daß man solche Lösungsmittel LM verwendet, die als Medium bei der Polymerisation der Monomeren I und III in Lösung dienen.

**10.** Verfahren gemäß den Ansprüchen 2 bis 9, dadurch gekennzeichnet, daß die flüssigkristallinen Poly(meth)acrylsäureester PP oder die Gemische aus PP und einer oder mehreren Verbindungen der Formel II aus der Lösung in üblicher Weise in Filmform überführt, Vom Lösungsmittel LM befreit und

durch Tempern, vorzugsweise bei Temperaturen oberhalb der Glastemperatur Tg, vernetzt werden und die vernetzten Polymerisate anschließend durch Verstrecken bei Temperaturen zwischen Tg und Klärtemperatur Tn,i orientiert werden.

**11.** Verfahren gemäß den Ansprüchen 2 bis 10, dadurch gekennzeichnet, daß die flüssigkristallinen Poly(meth)acrylsäureester PP oder die Gemische aus PP und einer oder mehreren Verbindungen der Formel II in der Schmelze oder in einer hochkonzentrierten Lösung orientiert und danach durch Abkühlen vernetzt und in einen festen Film überführt werden.

**12.** Verfahren gemäß den Ansprüchen 2 bis 6, dadurch gekennzeichnet, daß die Schmelzen der flüssigkristallinen Poly(meth)acrylsäureester PP oder der Gemische aus PP und einer oder mehreren Verbindungen der Formel II durch Abkühlen vernetzt und in einen festen Film überführt werden, welcher vor der Vernetzung und/oder danach orientiert werden kann.

**13.** Freitragende, anisotrope flüssigkristalline Polymerfilme, hergestellt nach dem Verfahren gemäß den Patentansprüchen 2 - 12.

**14.** Polymerfilme gemäß Anspruch 13, dadurch gekennzeichnet, daß sie Schichtdicken zwischen 1 und 1 000 µm, vorzugsweise zwischen 10 und 200 µm besitzen.

**15.** Verfahren gemäß den Ansprüchen 2 bis 14, dadurch gekennzeichnet, daß die Vorzugsorientierung der Mesogene im Polymerfilm durch die Verstreckrichtung geändert wird.

**16.** Verfahren gemäß den Ansprüchen 2 bis 15, dadurch gekennzeichnet, daß die Vernetzung der Poly(meth)acryläsureester PP oder der Gemische aus Poly(meth)acrylsäureester und difunktioneller, dienophiler Verbindung durch Tempern, vorzugsweise bei Temperaturen oberhalb des Klärpunkts Tn,i, aufgehoben wird.

**17.** Verfahren gemäß den Ansprüchen 2 bis 16, dadurch gekennzeichnet, daß die flüssigkristallinen Polymerfilme als Deckschichten oder Bestandteile eines Mehrschichten-Laminats eingesetzt werden können.

**18.** Verfahren gemäß Anspruch 17, dadurch gekennzeichnet, daß das Mehrschicht-Laminat aus mehreren flüssigkristallinen Polymerschichten besteht.

**19.** Verfahren gemäß den Ansprüchen 2 bis 18, dadurch gekennzeichnet, daß die Einzelschichten unterschiedliche Vorzugsorientierung, Farbstoffe, Monomere und Schichtdicke besitzen.

**20.** Verfahren gemäß den Ansprüchen 2 bis 19, dadurch gekennzeichnet, daß der Polymerfilm selbst als Substrat für eine oberflächenorientierte Schicht dient.

**21.** Verwendung der freitragenden, anisotropen, flüssigkristallinen Polymerfilme nach den Ansprüchen 1 bis 20 zur optischen Informationsspeicherung, zur Holographie und zur Herstellung optischer Komponenten.

Europäisches Patentamt

# EUROPÄISCHER RECHERCHENBERICHT

Nummer der Anmeldung

EP 92 12 0024

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5 ) |
|---|---|---|---|
| X | DATABASE WPIL<br>Derwent Publications Ltd., London, GB;<br>AN 87-126322<br>& JP-A-62 068 809 (NIPPON TELEG & TELEPH)<br>28. März 1987<br>* Zusammenfassung *<br>--- | 1-3,21 | C08F220/00<br>C08J5/18<br>C09K19/38<br>B32B27/30 |
| D,A | EP-A-0 410 205 (RÖHM GMBH)<br>* Ansprüche 1-17 *<br>--- | 1-21 | |
| A | EP-A-0 446 717 (BASF AG)<br>* Ansprüche 1-13 *<br>----- | 1-3 | |
| | | | **RECHERCHIERTE SACHGEBIETE (Int. Cl.5 )** |
| | | | C09K<br>C08J<br>C08F |

Der vorliegende Recherchenbericht wurde für alle Patentansprüche erstellt

| Recherchenort | Abschlußdatum der Recherche | Prüfer |
|---|---|---|
| DEN HAAG | 02 MAERZ 1993 | SIEMENS T. |

**KATEGORIE DER GENANNTEN DOKUMENTE**

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPO FORM 1503 03.82 (P0403)